# FASCICULE DE BREVET EUROPEEN

(11) **EP 1 290 528 B1**
(45) Date de publication et mention de la délivrance du brevet: **05.11.2014**
(21) Numéro de dépôt: 01936570.9
(22) Date de dépôt: 17.05.2001
(51) Int. Cl.: G06F 1/00, G07F 7/10, G06Q 20/34, G07F 7/08

(54) **PROCEDE DE PROTECTION CONTRE LA MODIFICATION FRAUDULEUSE DE DONNEES ENVOYEES A UN SUPPORT ELECTRONIQUE SECURISE**
VERFAHREN ZUM SCHUTZ GEGEN BETRÜGERISCHE ÄNDERUNGEN VON DATEN DIE ZU EINEM GESICHERTEN DATENTRÄGER ÜBERTRAGEN WERDEN
METHOD FOR PROTECTION AGAINST FRAUDULENT MODIFICATION OF DATA SENT TO A SECURE ELECTRONIC MEDIUM

(30) Priorité: 31.05.2000 FR 0007041
(43) Date de publication de la demande: 12.03.2003
(73) Titulaire: Gemalto SA, 92190 Meudon (FR)
(72) Inventeur: GIRARD, Pierre, F-13600 La Ciotat (FR); GIRAUD, Jean-Luc, London,W14 9HB (GB)
(86) Numéro de dépôt international: PCT/FR2001/001522
(87) Numéro de publication internationale: WO 2001/092996

(56) Documents cités:
- EP-A- 0 587 375
- EP-A- 0 763 791
- WO-A-00/17758
- WO-A1-00/26838
- FR-A- 2 749 680
- US-A- 5 596 718
- US-A- 5 844 497

## Description

L'invention concerne un procédé de protection contre la modification, frauduleuse de données envoyées par un utilisateur à un support sécurisé (une carte à puce par exemple). De telles données peuvent être constituées par une commande et/ou par un message accompagné d'une signature électronique pour son authentification. L'invention se place dans un contexte où le support sécurisé est couplé à un ordinateur de type PC (Personal Computer en anglais qui désigne un ordinateur domestique) via un lecteur.

Avec le développement du commerce électronique, que ce soit d'entreprise à entreprise ou d'entreprise à particulier, apparaît la nécessité de parvenir à un cadre, légal permettant de résoudre devant une juridiction les éventuels conflits. Ce cadre légal commence à se mettre en place, que ce soit en Europe ou aux Etats-Unis, avec la reconnaissance de la signature électronique comme moyen de preuve.

Dans ces conditions, il est important de considérer les moyens techniques à mettre en oeuvre pour générer des signatures électroniques fiables, c'est à dire les moins contestables possible. On utilise généralement des techniques de cryptographie à clé publique qui permettent de générer des signatures numériques de documents numériques. La plupart des algorithmes de cryptographie couramment utilisés, comme le DSA, Schnorr ou El Gamal par exemple, exploitent une fonction de hachage dans le procédé de génération de la signature électronique. Une telle fonction, pseudo-aléatoire, consiste à transformer le texte initial à signer en un texte haché qui brise la linéarité de la génération des signatures.

Les algorithmes de génération de signature électronique sont généralement implantés en utilisant du matériel et du logiciel, classiquement un ordinateur de type PC muni de logiciels et de la clé publique ainsi qu'un support sécurisé contenant la clé secrète de l'utilisateur et les algorithmes cryptographiques de signature.

Selon les applications, le support sécurisé peut être une carte à puce ou une carte PCMCIA par exemple. La plupart des ordinateurs PC portables sont munis d'un lecteur intégré PCMCIA. Certaines de ces cartes au format PCMCIA peuvent même être des lecteurs de carte à puce.

Nous supposons dans la suite que la signature électronique est générée à partir d'une carte à puce nécessitant l'utilisation d'un code d'authentification (code PIN) et que le lecteur est un coupleur très simple du type GemPC420 ne disposant ni de clavier ni d'écran. En effet les lecteurs avec de telles entrées/sorties (du type GCR500) sont beaucoup plus coûteux et se trouvent rarement connectés à un PC car ils sont autonomes, mais la mise en oeuvre de l'invention serait cependant facilitée par leur utilisation.

Classiquement, on considère qu'un procédé de génération de signature électronique doit produire une signature possédant les propriétés suivantes :
- Authenticité : une signature valide implique la volonté délibérée de l'utilisateur de signer le document auquel est associée la signature. Le protocole de signature doit donc garantir la participation active de l'utilisateur et de lui seul. Il faut par conséquent authentifier celui-ci préalablement à la signature. Dans un système utilisant une carte à puce, deux éléments garantissent la présence active de l'utilisateur : la présence d'un élément physique que lui seul possède (la carte) et l'entrée d'une donnée que lui seul connaît (un code PIN ou un mot de passe).

- Infalsifiabilité : seul l'utilisateur doit être en position de générer une signature pour un document donné. Cette propriété est garantie par l'utilisation d'algorithmes cryptographiques considérés comme sûrs et d'une infrastructure à clé publique de confiance, ainsi que par l'utilisation d'un moyen de stockage des clés résistant aux attaques physiques et logiques (une carte à puce par exemple).
- Non réutilisabilité : la signature associée à un document ne peut pas être réutilisée et associée à un -autre document, c'est à dire que toute modification du message associé à la signature doit pouvoir être détectée. Cette propriété est garantie par les procédés connus utilisant une fonction de hachage et des algorithmes de génération de signatures numériques aléatoires par appel à des aléas régénérés entre chaque signature.
- Non répudiation : l'utilisateur du document ne.. peut pas nier avoir délibérément signé un document après l'avoir fait. Cette propriété repose sur la sécurité globale du système, et n'est donc vraie que si la probabilité d'attaquer le système est négligeable. Dans le cas contraire un utilisateur pourra répudier sa signature en arguant de la faiblesse du système. Il est à noter que l'on doit tenir compte à ce niveau là des utilisateurs de mauvaise foi (connus sous l'expression anglo-saxonne de first party attack). En effet, un utilisateur peut délibérément introduire une faille dans le système pour pouvoir, a posteriori, répudier sa signature. Par exemple, si l'utilisateur génère lui-même sa clé publique, il peut délibérément choisir une clé faible tout en prétendant par la suite avoir choisi une clé au hasard qui s'est avérée faible et a été cassée.

On considère, en général, que les systèmes utilisant un PC et des cartes à puce sont suffisamment fiables pour garantir la non répudiabilité des signatures générées. Cependant, des attaques par l'intermédiaire de chevaux de Troie se sont suffisamment développées ces derniers temps pour que l'on soit en droit de contester ce point de vue.

Un cheval de Troie se définit comme une partie de code malveillant qui se dissimule dans un programme -effectuant des tâches banales.

Les systèmes d'exploitation utilisés actuellement sur les PC domestiques ainsi que le manque de vigilance des utilisateurs fait qu'il est très facile d'introduire un programme comportant un cheval de Troie sur un PC et que le cheval de Troie, une fois en place, dispose de tous les droits possibles. Ainsi, par exemple, des chevaux de Troie peuvent être dissimulés dans des programmes populaires et disponibles librement ou en partage sur la Toile (shareware sur Internet) tels que des économiseurs d'écran par exemple. Il existe également des chevaux de Troie génériques tels que « Back Orifice » qui permettent de prendre le contrôle total d'un PC à distance et de modifier tout ou partie de son contenu, ou des chevaux de Troie qui exploite une erreur (bug) dans un programme réseau (par exemple Internet Explorer).

Les attaques que peuvent mener les chevaux de Troie sont multiples, mais nous en retiendrons trois principales :
- Vol du code PIN de l'utilisateur : Le code PIN (de l'anglais Personnal Identification Number) constitue une valeur d'authentification permettant d'authentifier le titulaire de la carte.

Un cheval de Troie, installé quelque part dans le système d'exploitation, dans un logiciel applicatif, dans les pilotes du lecteur de carte ou dans les pilotes spécifiques à la carte, est en mesure de copier le code PIN qui est saisi par l'utilisateur et de le transmettre à l'auteur du cheval de Troie. Par la suite, il restera à ce dernier à subtiliser la carte à son possesseur légitime et à l'utiliser à son insu.
- Modification d'une commande émise par l'utilisateur à destination de la carte.

- Par exemple, une telle attaque peut être menée lors d'une demande de génération de clé à bord de la carte par le PC. Le cheval de Troie peut intercepter cette commande, générer lui-même une clé, personnaliser la carte avec cette clé et en transmettre une copie. Dans un tel cas, il est évident que les propriétés associées à la signature électroniques sont perdues, puisque le propriétaire de la carte n'est plus le seul à pouvoir produire une signature valide.
- Modification du document à signer entre sa visualisation par l'utilisateur et sa signature par la carte.

Lorsque l'utilisateur entre son code PIN pour signifier son approbation, le logiciel applicatif transmet le document à signer à la carte qui le hache avant de le signer (on se place ici dans un contexte où le volume de données à signer n'est pas incompatible avec les capacités de traitement d'une carte à puce).

Cependant, un cheval de Troie peut intercepter les données transmises à la carte et les modifier. L'utilisateur aura alors signé un document qu'il n'aura non seulement pas approuvé, mais encore jamais vu. Il est clair qu'une telle situation n'est pas acceptable. Il devient alors évident qu'avec la généralisation du commerce électronique et des signatures électroniques, de telles attaques peuvent servir d'argument à la réfutation de signatures.

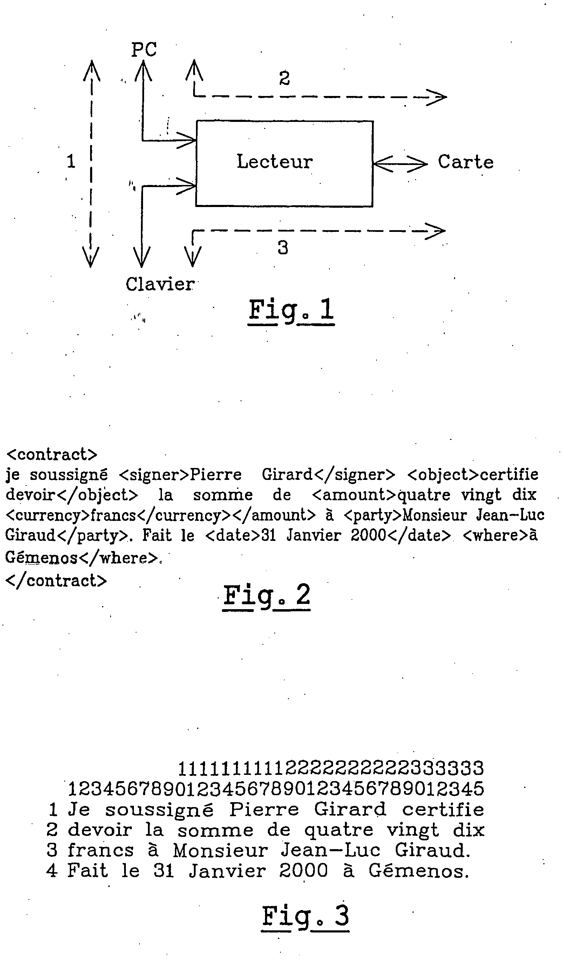

Le problème particulier du vol du code PIN est aujourd'hui pris en compte et maîtrisé dans des systèmes intégrant des lecteurs de carte à puce modernes, comme par exemple le GemPC420. Un tel lecteur, schématisé sur la figure 1, comporte un -mécanisme spécifique, appelé couramment « trusted path » ou chemin sécurisé en sécurité informatique, destiné à éviter le vol de code PIN par un cheval de Troie.

La figure 1 représente le principe de fonctionnement du GemPC420. Celui-ci est placé entre le PC et le clavier. Il est donc en position d'interrompre toutes les communications entre le clavier et le PC. Le lecteur possède trois modes de fonctionnement, correspondant à trois circuits de communication entre le PC, le clavier et le lecteur de la carte à puce. Ces circuits sont numérotés de 1 à 3 sur la figure 1.

Le circuit 1 correspond à un mode de fonctionnement où la carte n'est pas utilisée et où le PC dialogue avec le clavier. Le circuit 2 correspond à un mode de fonctionnement où le PC dialogue avec la carte par l'intermédiaire d'APDU (de l'anglais Application Protocol Data Unit) définit par la norme ISO pour normaliser les échanges entre un lecteur et une carte. Enfin, le circuit 3 correspond au trusted path : le lecteur coupe la communication entre le PC et le clavier et les touches frappées par l'utilisateur sont directement envoyées à la carte par le lecteur. Le lecteur passe dans le mode 3 sur ordre du PC et complète ensuite l'APDU envoyé à la carte par le PC avec les codes des touches frappées par l'utilisateur.

Pour plus de sécurité et de facilité d'utilisation, une diode électroluminescente (DEL) clignote sur le lecteur pour signifier que celui-ci est dans le mode 3, et seulement dans ce cas là.

Un cheval de Troie se trouve donc dans l'impossibilité d'intercepter le code PIN de l'utilisateur, puisque ce code ne transite à aucun moment par le PC. L'utilisateur ne doit entrer son code - PIN que lorsque le lecteur est en mode trusted path signalé par la DEL clignotante. En effet, un cheval de Troie peut afficher à l'écran un message invitant l'utilisateur à entrer son code PIN sans pour autant basculer le lecteur en mode trusted path. Dans ce cas, le lecteur ne couperait pas la communication clavier - lecteur et le cheval de Troie obtiendrait le code PIN.

En conclusion, il est clair que le lecteur de carte GemPC420 résout le problème du vol du code PIN par un cheval de Troie. Il existe également d'autres lecteurs, utilisant d'autres technologies, qui peuvent parvenir aux mêmes résultats.

On peut par exemple utiliser des lecteurs exploitant le protocole de communication USB (de l'anglais Universal Serial Bus) sur un ordinateur équipé d'un clavier USB (comme par exemple les ordinateurs Apple). Le principe est très similaire à celui décrit précédemment : le lecteur de carte possède deux connecteurs USB. Le premier se branche sur un des ports USB de l'ordinateur et le second est utilisé pour brancher le clavier. En temps normal, le lecteur transmet les informations échangées entre le clavier et l'ordinateur. Lorsqu'il reçoit une commande d'isolement sur son canal, le lecteur coupe la connexion entre le clavier et le PC. Les informations qui sont alors tapées sur le clavier ne sont pas envoyées à l'ordinateur mais utilisées directement par le lecteur. Un code PIN entré de cette manière ne rentre donc jamais sur le PC et ne risque pas d'être ainsi la cible d'un cheval de Troie.

Dans la suite de ce document, nous partons du principe que notre solution utilise un lecteur GemPC420, mais il est clair que tout autre lecteur disposant d'un trusted path, comme par exemple un lecteur USB que nous venons de décrire, est également utilisable.

Outre le problème du vol du code PIN, reste à résoudre le problème de la modification d'une commande et/ou d'un document à signer.

Actuellement, un cheval de Troie présent par exemple dans un pilote du lecteur peut modifier le document envoyé à la carte pour signature après acceptation de celui-ci par l'utilisateur. Par exemple le document «Je soussigné.X reconnaît devoir 10 FF à Y.» peut être changé par le cheval de Troie en «Je soussigné X reconnaît devoir 10000 FF à Y.»

Un cheval de Troie peut également modifier une commande, par exemple en générant lui-même une clé dont il conserve une copie et en envoyant l'ordre à la carte de mémoriser cette clé, au lieu d'envoyer l'ordre à la carte de générer une clé à bord.

La présente invention a pour but de remédier à ce problème et propose une solution originale pour résoudre ce type d'attaque.

A cet effet, la présente invention propose un procédé mis en oeuvre par un système constitué d'une carte couplée à un ordinateur muni d'un logiciel spécifique. La carte sélectionne et mémorise un certain nombre de données émises par l'utilisateur et demande confirmation, dans un mode de communication sécurisé qui ne transite pas par le PC, de l'authenticité desdites données.

Pour ce faire, la carte demande à l'utilisateur de saisir au clavier tout ou partie de la commande émise ou des mots sélectionnés dans le texte initial à signer, puis elle vérifie qu'ils sont bien identiques à - ceux qu'elle a reçus initialement.

Le procédé selon l'invention consiste essentiellement à vérifier qu'aucune attaque visant à modifier une commande et/ou un document à signer n'est intervenue avant de procéder à l'exécution de la commande et/ou à la génération de la signature électronique dudit document.

La présente invention a plus particulièrement pour objet un procédé de protection contre la modification de données envoyées par un utilisateur à un support sécurisé via un lecteur, caractérisé en ce qu'il consiste à sélectionner et mémoriser certaines des données et à obtenir confirmation de l'authenticité desdites données sélectionnées en vérifiant qu'elles sont identiques à celles saisies sur requête par l'utilisateur dans un mode de communication sécurisé du lecteur.

Selon une première application du procédé selon l'invention, la donnée est une commande.

Selon une variante, la commande est une commande de génération de clé.

Selon une deuxième application du procédé selon l'invention, la donnée est un document signé par une signature électronique générée par le support sécurisé.

Selon une caractéristique, le procédé consiste à sélectionner et mémoriser certains mots du document à signer et à obtenir confirmation de l'authenticité dudit document en vérifiant que lesdits mots sélectionnés sont identiques à ceux saisis sur requête par l'utilisateur dans un mode de communication sécurisé du lecteur.

Selon une caractéristique, les mots sélectionnés pour confirmation le sont par l'utilisateur dans un mode de communication sécurisé.

Selon une autre caractéristique, les mots sélectionnés pour confirmation le sont par le support sécurisé.

Selon une caractéristique, les mots sélectionnés par le support sécurisé le sont de manière aléatoire.

Selon une autre caractéristique, les mots sélectionnés par le support sécurisé le sont de manière déterministe, le document à signer étant un document structuré.

Selon une variante de mise en oeuvre, le support sécurisé sélectionne pour confirmation les mots correspondants à des nombres.

Selon une variante de mise en oeuvre, le procédé consiste en outre à demander confirmation de l'emplacement dans le document des mots sélectionnés pour confirmation.

Selon une caractéristique, l'emplacement des mots sélectionnés est défini par les numéros de lignes et de colonnes du document à signer.

Selon une variante de mise en oeuvre, le support sécurisé sélectionne comme mots de confirmation toute une colonne et/ou toute une ligne du document à signer.

Selon une caractéristique, le document à signer est au format ASCII.

L'invention concerne également un terminal apte à communiquer avec un support sécurisé par un lecteur comportant un mode de communication sécurisé entre le support et le lecteur, ledit mode sécurisé ne faisant transiter aucune information par le terminal, ledit terminal comportant un programme apte à mettre en oeuvre les étapes suivantes :
- envoie des données au support sécurisé,
- requête d'une saisie de données de confirmation,
- envoie des données de confirmation au support sécurisé dans un mode de communication sécurisé.

Selon une caractéristique, le terminal comprend au moins une touche fonction ou une séquence de touches fonction réservée pour l'activation du mode sécurisé.

Selon une caractéristique, le terminal comprend en outre un mini-scanner comportant un mode .. de communication sécurisé avec le terminal.

Selon une application, le terminal est constitué par un téléphone mobile (GSM).

Selon une autre application, le terminal est constitué par un ordinateur de type PC.

Selon une autre application, le terminal est constitué par une carte à puce munie d'un écran et d'un clavier intégrés.

Selon une autre application, le terminal est constitué par un assistant personnel digital (PDA).

Selon une application, le support sécurisé est constitué par une carte.à puce.

Selon une autre application, le support sécurisé est constitué par une carte PCMCIA.

L'invention concerne en outre une carte à puce apte à communiquer avec un terminal via un lecteur comportant un mode de communications sécurisé, caractérisée en ce qu'elle comporte un programme apte à mettre en oeuvre les étapes suivantes :
- sélection et mémorisation de données reçues du terminal dans un mode de communication non sécurisé,
- demande de confirmation des dites données,
- comparaison des données mémorisées avec celles reçues en confirmation du terminal dans le mode - de communication sécurisé.

La présente invention apporte une solution efficace à la modification par un cheval de Troie de commandes ou de documents signés par une carte à puce. Le reproche qui peut être fait à ce procédé est son manque d'ergonomie pour l'utilisateur, mais il rare qu'une augmentation de la sécurité se fasse sans contrainte et, de plus, le rapport sécurité/ergonomie peut être réglé à volonté.

Les particularités et avantages de l'invention apparaîtront clairement à la lecture de la description qui suit, faite à titre d'exemple illustratif et non limitatif, en référence aux figures annexées sur lesquelles :
- la figure 1, déjà décrite, est un schéma du lecteur de carte GEMPC420 ;
- la figure 2 représente un exemple de texte à signer structuré ;
- la figure 3 représente un exemple de texte à signer organisé en lignes et colonnes ;
- la figure 4 est un organigramme de la mise en oeuvre du procédé selon l'invention, appliqué à la signature d'un document, avec un lecteur de type GEMPC420.
- la figure 5 est un organigramme de la mise en oeuvre du procédé selon l'invention, appliqué à la signature d'un document, avec un lecteur ou une carte disposant d'un clavier et d'un écran intégrés.
- la figure 6 est un organigramme de la mise en oeuvre du procédé selon l'invention, appliqué à la génération d'une commande, avec un lecteur de type GEMPC420.
- la figure 7 est un organigramme de la mise en oeuvre du procédé selon l'invention, appliqué à la génération d'une commande, avec un lecteur ou une carte disposant d'un clavier et d'un écran intégrés.

On décrit dans un premier temps le procédé selon l'invention dans son application à la protection contre la modification d'un document à signer.

Si on reprend l'exemple précédent d'un texte « Je soussigné X certifie devoir 10 francs à Y », et si par une attaque, le cheval de Troie modifie le mot 10 en 10000, le procédé selon l'invention doit être en mesure de le démasquer.

A cet effet, le mot 10 est sélectionné pour confirmation. La carte demande alors à l'application de mettre en évidence (par exemple en rouge ou en gras) le mot à saisir pour vérification par l'utilisateur et d'afficher un message du type «Veuillez saisir le mot en surbrillance pour confirmation». Le cheval de Troie, recevant le mot 10000 de la carte, va mettre en surbrillance le mot 10 dans le texte affiché sur l'écran de l'utilisateur qui va saisir 10. Si la saisie se fait en mode normal (mode 1 du GEMPC420), le cheval de Troie aura l'opportunité de remplacer les touches saisies par l'utilisateur par 10000 et la carte effectuera, avec succès, la comparaison entre 10000 et 10000. Si la saisie exploite le sécurisé du lecteur (mode 3 du GemPC420), le cheval de Troie ne pourra modifier les touches frappées par l'utilisateur et la carte comparera 10 et 10000 détectant ainsi la modification du document.

Il apparaît alors clairement que la solution proposée par la présente invention ne détecte pas à -coup sûr une attaque. Si dans l'exemple précédent, la carte sélectionne pour vérification un mot du document qui n'a pas été modifié par le cheval de Troie (par exemple «soussigné»), elle ne détectera pas l'attaque et signera le document modifié. Il est donc important de mettre en oeuvre la solution de l'invention de telle sorte qu'une attaque, même si elle reste possible ait une probabilité négligeable de réussir.

Il apparaît que le choix des mots à confirmer ainsi que leur nombre ont une importance déterminante.

En ce qui concerne le nombre de mots à confirmer, il s'agit essentiellement d'un compromis entre le degré de sécurité désiré et la gêne occasionnée par la saisie de la confirmation. Une sécurité maximale est obtenue lorsque l'utilisateur ressaisit le texte intégral du document à signer. En pratique le nombre de mots de confirmation dépendra du degré de sécurité désiré et des enjeux du contexte applicatif.

En ce qui concerne le choix des mots à confirmer, plusieurs contraintes doivent être prises en compte. D'une part, les mots à confirmer sont-ils choisis par l'utilisateur et/ou par la carte, et d'autre part, ces mots sont-ils choisis aléatoirement et/ou de manière déterministe.

En outre, une remarque préliminaire s'impose quant au choix des mots à confirmer. Nous avons en effet considéré jusqu'à présent que le document à signer était un texte dans un format intelligible par la carte et dont les mots étaient comparables directement avec une saisie au clavier.

Un texte en format ASCII satisfait facilement ces critères. Un document dans un format propriétaire (par exemple Microsoft Word) n'est pas utilisable directement. Par contre, il est tout à fait possible d'exporter une version ASCII d'un document Microsoft Word à signer. Cette version devra être visualisée par l'utilisateur, car ce sera celle qui fera référence en cas de contestation de la transaction ou du contrat. Une solution intermédiaire pourrait consister à utiliser le format RTF (Rich Text Format) qui permet d'ajouter des attributs de présentation au texte (gras, souligné) tout en conservant un codage ASCII. Le prix à payer est un analyseur de RTF à bord de la carte.

La présente invention peut en fait être appliquée à un format de texte quelconque, mais il est à noter que certains formats sont plus pratiques que d'autres. On peut imaginer par exemple (même si les technologies sont plus délicates à mettre en oeuvre) des formats « bitmaps » (obtenus par exemple en numérisant un document papier) comparés à une entrée sur un « touch-pad » (écran tactile) du clavier ou un dispositif du type tablette graphique. Un tel dispositif permettrait par exemple la signature de dessins pour lesquelles l'utilisateur ne confirmerait plus des mots mais des portions de dessins qu'il reproduirait.

Dans la suite nous considérons que nous disposons d'un texte au format ASCII.

Dans la description qui suit, en référence aux figures 2 et 3, on considère un exemple de texte à signer rédigé comme suit : « Je soussigné Pierre Girard certifie devoir la somme de quatre vingt dix francs à Monsieur Jean-Luc Giraud. Fait le 31 Janvier 2000 à Gémenos. »

Un premier point important dans la mise en oeuvre du procédé selon l'invention est de déterminer si le choix des mots à confirmer est effectué par la carte - et/ou par l'utilisateur.

Le choix, par la carte, de mots à confirmer pouvant tomber sur des termes insignifiants d'un contrat ou d'un document (comme «soussigné» dans notre exemple), on pourrait penser que l'utilisateur est le plus à même de désigner les termes importants du document. Il peut indiquer à la carte, en mode 3 du lecteur, quels mots il désire confirmer avant que celle-ci ne reçoive le document. Lorsque la carte reçoit le document et demande confirmation, l'utilisateur confirme, en mode 3 du lecteur, les mots prévus.

Néanmoins, cette méthode ne défend pas le système contre les utilisateurs de mauvaise foi (dits first party attack) qui peuvent demander à la carte de faire confirmer des mots insignifiants dans le document («soussigné» dans notre exemple), et répudier par la suite leur signature en prétendant avoir été victime d'un cheval de Troie.

Pour obtenir un niveau de sécurité maximal, il est avantageux de réaliser un compromis dans lequel les mots à confirmer sont sélectionnés à part égale par l'utilisateur (défense contre les chevaux de Troie) et par la carte (défense contre les utilisateurs de mauvaise foi).

Un deuxième point important dans la mise en oeuvre du procédé selon l'invention est de déterminer si le choix des mots à confirmer est aléatoire ou déterministe ?

Lorsque l'utilisateur choisit les mots à confirmer, son comportement est a priori non prédictible et il utilisera son bon sens pour choisir les mots essentiels du document. Un cheval de Troie aura donc que très peu de chance de mener à bien une attaque.

Concernant le choix de mots à confirmer par la carte, on peut hésiter entre une stratégie aléatoire ou un algorithme de choix déterministe. La stratégie aléatoire est par définition imprédictible pour un cheval de Troie. Néanmoins, si le rapport entre la quantité de mots insignifiants et le nombre de mots de confirmation est très important dans le document, la carte, choisissant des mots au hasard, aura fort peu de chance de tomber sur un mot qui soit une cible potentielle pour un cheval de Troie ou un utilisateur de mauvaise foi.

Afin d'éviter ce problème, la carte peut essayer de déterminer les mots importants du document. On peut penser immédiatement à toutes les sommes et les dates par exemple. Cependant un tel algorithme est relativement délicat à mettre en oeuvre tel quel.

Pour faciliter l'interprétation du texte par la carte et le choix de mots pertinents pour confirmation, on peut avantageusement transmettre à la carte du texte structuré, par exemple en XML (Extended Mark-up Language), ce qui implique d'avoir à bord de la carte l'analyseur correspondant. Un tel texte structuré est illustré sur la figure 2. La carte peut ainsi sélectionner pour confirmation des éléments importants tels que des dates ou des sommes.

On peut également imaginer des textes standards «à trous» où seules les informations nominatives, les dates et les montants par exemple, resteraient à compléter.

Enfin notons que la carte peut avoir une stratégie mixte en complétant son choix déterministe par des mots choisis aléatoirement.

Outre le choix et le nombre de mots à confirmer, -il est important de désigner précisément ces mots.

En effet, il est évident que la confirmation de la présence d'un certain nombre de mots dans un document ne suffit pas à en fixer le sens. Il faut s'assurer également que l'ordre des mots est respecté. Par exemple, il est important de s'assurer que le mot «cent» n'a pas été rajouté entre les mots «de» et «quatre». Il importera donc de désigner précisément l'emplacement respectif des mots «de» et «quatre».

On peut pour cela utiliser un texte organisé en lignes et colonnes, tel qu'illustré sur la figure 3, afin de désigner précisément l'emplacement des mots à confirmer.

Lors de la saisie des mots de confirmation, la carte peut ainsi demander à l'utilisateur d'entrer pour confirmation les mots numéro 4 à 7 de la ligne 2 ainsi que le mot 1 de la ligne 3. L'utilisateur entrera alors les mots demandés ainsi que leur emplacement dans le texte. Une convention pourrait être « 12m4 de » pour confirmer le mot «de» en position 4 de la ligne 2.

Pour éviter les suppressions, insertions est déplacements de mots, une stratégie possible consiste à demander confirmation de colonnes du texte. Dans notre exemple, si la carte demande confirmation de la colonne 14, l'utilisateur saisira « c14 Pmin ».

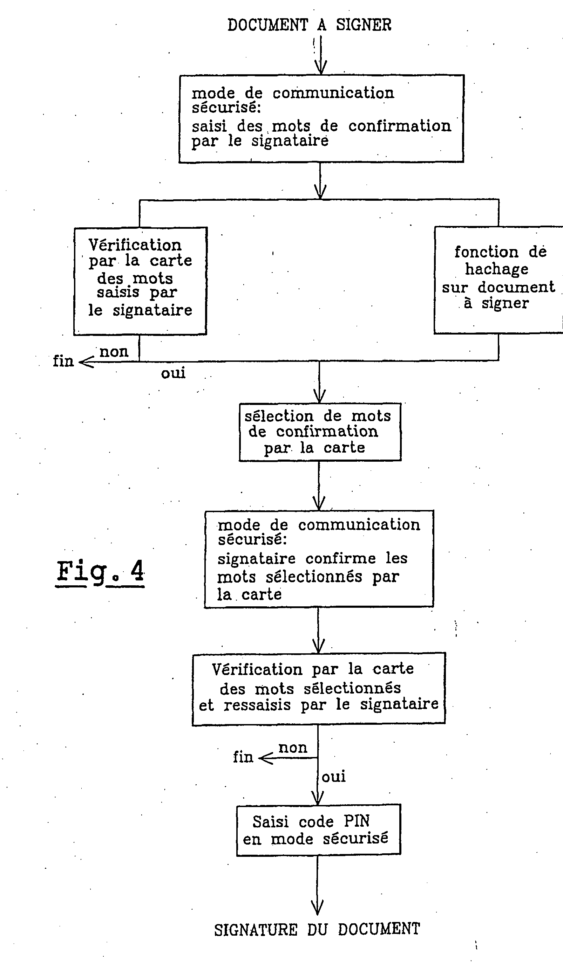

La mise en oeuvre du procédé selon l'invention est récapitulée dans l'exemple complet suivant, en référence à l'organigramme de la figure 4 :
Le procédé est mis en oeuvre par un logiciel adapté mémorisé sur un PC apte à communiquer avec une carte à puce par l'intermédiaire d'un lecteur du type GEMPC420.
   1. Le logiciel affiche à l'écran de l'utilisateur le document à signer (nous utilisons toujours l'exemple -des figures 2 et 3).
   2. Le logiciel bascule le GemPC420 en mode 3. L'utilisateur vérifie que la DEL verte clignote.
   3. L'utilisateur indique à la carte les mots qu'il désire saisir pour confirmation en saisissant « 12m4-7 de quatre vingt dix 13m1 francs ».
   4. Le logiciel bascule le GemPC420 en mode 2, puis transmet le texte à signer à la carte. Si le volume de texte à signer est important, la carte peut le hacher à la volée, tout en effectuant les deux étapes suivantes.
   5. La carte vérifie que la saisie de l'utilisateur est cohérente par rapport au texte reçu, sinon, le protocole se termine (on évite ainsi les attaques par cheval de Troie).
   6. La carte choisie des mots que l'utilisateur devra saisir pour confirmation. Par exemple, la carte sélectionne la date, puis au hasard la colonne 21 et le mot «Pierre». La carte transmet ce choix au logiciel.
   7. Le logiciel passe en rouge ou en surbrillance les mots à confirmer et bascule le GemPC420 en mode 3. L'utilisateur vérifie que la DEL verte clignote.
   8. L'utilisateur saisit les données demandées par la carte pour confirmation : « 14m3-5 31 janvier 2000 c21 Gua0 11m3 Pierre ».
   9. La carte vérifie que les données de confirmation sont compatibles avec le document reçu, sinon le protocole se termine (on évite ainsi les attaques par cheval de Troie et/ou par un utilisateur de mauvaise foi).
   10. Le logiciel demande à l'utilisateur de saisir son code PIN pour confirmer sa volonté de signer le document (le GemPC420 étant en mode 3). L'utilisateur vérifie que la DEL verte clignote.
   11. L'utilisateur saisit son code PIN.
   12. La carte vérifie le code PIN et, s'il est correct, signe le document et retourne la signature au logiciel.

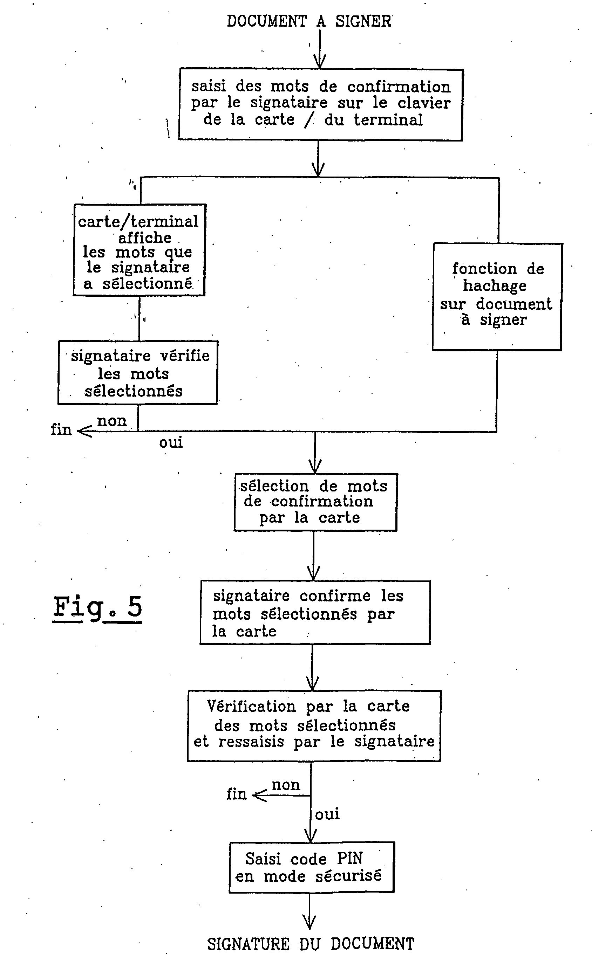

Dans le cas où l'on disposerait d'un lecteur de carte ou d'une carte comportant un écran et un clavier intégrés, la procédure de signature est allégée comme suit en référence à l'organigramme de la figure 5 :
1. Le logiciel affiche à l'écran de l'utilisateur le document à signer (nous utilisons toujours l'exemple des figures 2 et 3).
2. L'utilisateur indique les mots qu'il désire saisir pour confirmation en saisissant au clavier du lecteur (de la carte) « 12m4-7 13ml ».
3. Le logiciel transmet le texte à signer à la carte. Si le volume de texte à signer est important, la carte peut le hacher à la volée, tout en effectuant les deux étapes suivantes.
4. Le lecteur (la carte) affiche les mots que l'utilisateur a demandés à confirmer « 12m4-7 de quatre vingt dix 13ml francs ».
5. L'utilisateur vérifie que ces mots de confirmation correspondant bien au texte qu'il désire signer, sinon, le protocole se termine (on évite ainsi les attaques par cheval de Troie).
6. La carte choisie des mots que l'utilisateur devra saisir pour confirmation. Par exemple, la carte sélectionne la date, puis au hasard la colonne 21 et le mot «Pierre». Ce choix est affiché sur l'écran du lecteur ou de la carte.
7. L'utilisateur saisi au clavier du lecteur (de la carte) les mots à confirmer: « 14m3-5 31 janvier 2000 c21 Gua0 11m3 Pierre ».
8. La carte vérifie que les données de confirmation sont compatibles avec le document reçu, sinon le protocole se termine (on évite ainsi les attaques par cheval de Troie et/ou par un utilisateur de mauvaise foi).
9. Le logiciel demande à l'utilisateur de saisir son code PIN pour confirmer sa volonté de signer le document.
10. L'utilisateur saisit son code PIN.
11. La carte vérifie le code PIN et, s'il est correct, signe le document et retourne la signature au logiciel.

Le procédé selon l'invention peut également être mis en oeuvre sur des terminaux de type GSM (téléphones mobiles) ou PDA (Personal Digital Assistant) à conditions que ces derniers disposent au moins d'une touche ou d'une séquence de touches fonction destinées à activer un mode sécurisé ainsi qu'une sortie permettant de savoir si le mode sécurisé est activé ou non.

Plusieurs possibilités d'implémentation du procédé selon l'invention peuvent être envisagées.

La première consiste à réaliser une interface entre le système proposé par l'invention (le logiciel mettant en oeuvre le procédé selon l'invention qui est apte à piloter le lecteur de carte et à fournir les instructions à l'utilisateur) et des logiciels tels que Word ou Excel qui sont extensibles. Dans ce cadre, il faut coder en Visual Basic une interface avec les API (Application Programming Interface) de signature et les fonctionnalités de mise en surbrillance dans le texte des mots à ressaisir.

Une autre implémentation possible de ce système peut être obtenue en intégrant le logiciel de mise en oeuvre de l'invention à une page Web au. moyen d'une application Java.

Par ailleurs, un des inconvénients du procédé selon l'invention réside dans l'effort nécessité par la saisie de certains mots par l'utilisateur, ce qui va à l'encontre de l'évolution des interfaces vers plus de convivialité. Une solution à ce problème peut consister à ajouter au système mettant en oeuvre l'invention un mini-scanner sécurisé branché sur le même port de communication que le lecteur ou directement sur le lecteur lui-même. Dans le cas où le lecteur et le mini-scanner sont branchés sur un même port, le lecteur sera bien évidement disposé entre le PC et le mini-scanner, comme dans le cas du clavier pour le GemPC420. Le mini-scanner permet à l'utilisateur de saisir des mots affichés à l'écran ou imprimés, ce qui lui évite une nouvelle saisie.

Le procédé de protection selon l'invention peut également être appliqué au problème de la modification de commandes envoyées à la carte par un cheval de Troie.

L'invention propose à cet effet un procédé de protection contre la modification de la commande envoyée au support sécurisé (la carte à puce dans l'exemple considéré). Ce procédé met en oeuvre les mêmes étapes que celui décrit en référence à la protection contre la modification d'un document signé.

Après avoir reçu la commande, de génération de clé à bord par exemple, la carte va demander à l'utilisateur de confirmer cette commande.

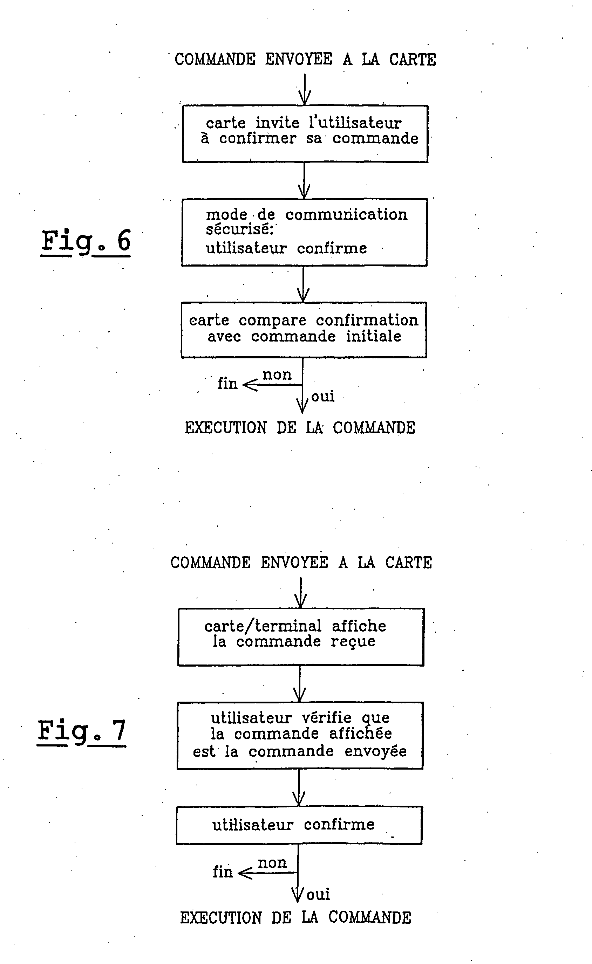

Dans le cas où le support sécurisé est couplé à un lecteur du type GemPC420, le procédé se déroule selon les étapes suivantes en référence à la figure 6 :
1. L'utilisateur est invité à confirmer sa commande par un message affiché sur l'écran du PC.
2. le logiciel bascule le GemPC420 en mode 3. L'utilisateur vérifie que la DEL verte clignote.
3. L'utilisateur confirme sa commande (par exemple en tapant GENK pour une génération de clé à bord).
4. La carte compare la saisie de l'utilisateur avec la commande reçue. Si la comparaison est négative, le protocole se termine, sinon, la carte exécute la commande (en générant la clé).

Dans le cas où un terminal ou une carte avec écran et clavier intégrés est utilisé, le procédé se déroule selon les étapes suivantes en référence à la figure 7 :
1. La commande reçue par la carte est affichée sur l'écran du terminal.
2. L'utilisateur vérifie qu'il s'agit de la commande qu'il désire produire, puis confirme par une touche fonction du terminal ou met fin au protocole.

## Revendications

1. Procédé de protection contre la modification de données envoyées par un utilisateur à un support sécurisé via un lecteur, et reçues dans un mode de communication non sécurisé, **caractérisé en ce qu'**il consiste à sélectionner et mémoriser certaines des données reçues dans un mode de communication non sécurisé et à obtenir confirmation de l'authenticité desdites données sélectionnées en vérifiant qu'elles sont identiques à celles saisies sur requête par l'utilisateur dans un mode de communication sécurisé du lecteur.

2. Procédé de protection selon la revendication 1, **caractérisé en ce que** la donnée est une commande.

3. Procédé de protection selon la revendication 2, **caractérisé en ce que** la commande est une commande de génération de clé.

4. Procédé de protection selon la revendication 1, **caractérisé en ce que** la donnée est un document à signer par une signature électronique générée par le support sécurisé.

5. Procédé de protection selon la revendication 4, **caractérisé en ce que** qu'il consiste à sélectionner et mémoriser certains mots du document à signer et à obtenir confirmation de l'authenticité dudit document en vérifiant que lesdits mots sélectionnés sont identiques à ceux saisis sur requête par l'utilisateur dans un mode de communication sécurisé du lecteur.

6. Procédé de protection selon la revendication 5, **caractérisé en ce que** les mots sélectionnés pour confirmation le sont par l'utilisateur dans un mode de communication sécurisé.

7. Procédé de protection selon l'une des revendications 5 à 6, **caractérisé en ce que** les mots sélectionnés pour confirmation le sont par le support sécurisé.

8. Procédé de protection selon la revendication 7, **caractérisé en ce que** les mots sélectionnés par le support sécurisé le sont de manière aléatoire.

9. Procédé de protection selon la revendication 7, **caractérisé en ce que** les mots sélectionnés par le support sécurisé le sont de manière déterministe, le document à signer étant un document structuré.

10. Procédé de protection selon la revendication 9, **caractérisé en ce que** le support sécurisé sélectionne pour confirmation les mots correspondants à des nombres.

11. Procédé de protection selon l'une quelconque des revendications 4 à 10, **caractérisé en ce qu'**il consiste en outre à demander confirmation de l'emplacement dans le document des mots sélectionnés pour confirmation.

12. Procédé de protection selon la revendication 11, **caractérisé en ce que** l'emplacement des mots sélectionnés est défini par les numéros de lignes et de colonnes du document à signer.

13. Procédé de protection selon la revendication 12, **caractérisé en ce que** le support sécurisé sélectionne comme mots de confirmation toute une colonne et/ou toute une ligne du document à signer.

14. Procédé de protection selon l'une quelconque des revendications 4 à 13, **caractérisé en ce que** le document à signer est au format ASCII.

15. Terminal apte à communiquer avec un support sécurisé au moyen d'un lecteur comportant un mode de communication sécurisé entre le support et le lecteur, ledit mode sécurisé ne faisant transiter aucune information par le terminal, **caractérisé en ce qu'**il comporte un programme apte à mettre en oeuvre les étapes suivantes:
- envoi des données au support sécurisé dans un mode de communication non sécurisé,
- requête d'une saisie de données de confirmation dans un mode sécurisé qui ne transite pas par le terminal,
- envoi des données de confirmation au support sécurisé dans un mode de communication sécurisé.

16. Terminal selon la revendication 15, **caractérisé en ce qu'**il comprend au moins une touche fonction ou une séquence de touches fonction réservée pour l'activation du mode sécurisé.

17. Terminal selon l'une des revendications 15 à 16, **caractérisé en ce qu'**il comprend en outre un mini-scanner comportant un mode de communication sécurisé avec le terminal.

18. Terminal selon l'une des revendications 15 à 17, **caractérisé en ce qu'**il est constitué par un téléphone mobile (GSM).

19. Terminal selon l'une des revendications 15 à 17, **caractérisé en ce qu'**il est constitué par un ordinateur de type PC.

20. Terminal selon l'une des revendications 15 à 17, **caractérisé en ce qu'**il est constitué par une carte à puce munie d'un écran et d'un clavier intégrés.

21. Terminal selon l'une des revendications 15 à 17, **caractérisé en ce qu'**il est constitué par un assistant personnel digital (PDA pour Personal Digital Assistant).

22. Terminal selon l'une des revendications 15 à 21, **caractérisé en ce que** le support sécurisé est constitué par une carte à puce.

23. Terminal selon l'une des revendications 15 à 21, **caractérisé en ce que** le support sécurisé est constitué par une carte PCMCIA.

## Patentansprüche

1. Verfahren zum Schutz gegen die Änderung von Daten, die von einem Nutzer über ein Lesegerät zu einem gesicherten Träger gesendet und in einem ungesicherten Kommunikationsmodus empfangen werden, **dadurch gekennzeichnet, dass** es darin besteht, einige der in einem ungesicherten Kommunikationsmodus empfangenen Daten auszuwählen und zu speichern und eine Bestätigung der Authentizität der ausgewählten Daten zu erhalten, indem geprüft wird, ob sie mit denjenigen identisch sind, die auf Anfrage des Nutzers in einem gesicherten Kommunikationsmodus des Lesegeräts erfasst wurden.

2. Schutzverfahren nach Anspruch 1, **dadurch gekennzeichnet, dass** die Daten ein Befehl sind.

3. Schutzverfahren nach Anspruch 2, **dadurch gekennzeichnet, dass** der Befehl ein Schlüsselerzeugungsbefehl ist.

4. Schutzverfahren nach Anspruch 1, **dadurch gekennzeichnet, dass** die Daten ein Dokument sind, das mit einer durch den gesicherten Träger erzeugten elektronischen Signatur zu unterzeichnen ist.

5. Schutzverfahren nach Anspruch 4, **dadurch gekennzeichnet, dass** es darin besteht, einige Wörter des zu unterzeichnenden Dokuments auszuwählen und zu speichern und eine Bestätigung der Authentizität des Dokuments zu erhalten, indem geprüft wird, ob die ausgewählten Wörter mit denjenigen identisch sind, die auf Anfrage des Nutzers in einem gesicherten Kommunikationsmodus des Lesegeräts erfasst wurden.

6. Schutzverfahren nach Anspruch 5, **dadurch gekennzeichnet, dass** die zur Bestätigung ausgewählten Wörter von dem Nutzer in einem gesicherten Kommunikationsmodus ausgewählt werden.

7. Schutzverfahren nach einem der Ansprüche 5 bis 6, **dadurch gekennzeichnet, dass** die zur Bestätigung ausgewählten Wörter durch den gesicherten Träger ausgewählt werden.

8. Schutzverfahren nach Anspruch 7, **dadurch gekennzeichnet, dass** die durch den gesicherten Träger ausgewählten Wörter zufällig ausgewählt werden.

9. Schutzverfahren nach Anspruch 7, **dadurch gekennzeichnet, dass** die durch den gesicherten Träger ausgewählten Wörter deterministisch ausgewählt werden, wobei das zu unterzeichnende Dokument ein strukturiertes Dokument ist.

10. Schutzverfahren nach Anspruch 9, **dadurch gekennzeichnet, dass** der gesicherte Träger zur Bestätigung die Wörter auswählt, die Zahlen entsprechen.

11. Schutzverfahren nach einem der Ansprüche 4 bis 10, **dadurch gekennzeichnet, dass** es ferner darin besteht, eine Bestätigung der Stelle der zur Bestätigung ausgewählten Wörter im Dokument anzufordern.

12. Schutzverfahren nach Anspruch 11, **dadurch gekennzeichnet, dass** die Stelle der ausgewählten Wörter durch die Zeilen- und Spaltennummern des zu unterzeichnenden Dokuments definiert ist.

13. Schutzverfahren nach Anspruch 12, **dadurch gekennzeichnet, dass** der gesicherte Träger eine vollständige Spalte und/oder eine vollständige Zeile des zu unterzeichnenden Dokuments als Bestätigungswörter auswählt.

14. Schutzverfahren nach einem der Ansprüche 4 bis 13, **dadurch gekennzeichnet, dass** das zu unterzeichnende Dokument im ASCII-Format vorliegt.

15. Endgerät, das über ein Lesegerät mit einem gesicherten Kommunikationsmodus zwischen Träger und Lesegerät mit einem gesicherten Träger kommunizieren kann, wobei im gesicherten Modus keine Information über das Endgerät geleitet wird, **dadurch gekennzeichnet, dass** es ein Programm aufweist, das folgende Schritte durchführen kann:
- Senden der Daten zum gesicherten Träger in einem ungesicherten Kommunikationsmodus,
- Anfordern einer Erfassung von Bestätigungsdaten in einem gesicherten Modus, der nicht über das Endgerät erfolgt,
- Senden der Bestätigungsdaten zum gesicherten Träger in einem gesicherten Kommunikationsmodus.

16. Endgerät nach Anspruch 15, **dadurch gekennzeichnet, dass** es mindestens eine Funktionstaste oder eine Folge von Funktionstasten aufweist, die zur Aktivierung des gesicherten Modus bestimmt sind.

17. Endgerät nach einem der Ansprüche 15 bis 16, **dadurch gekennzeichnet, dass** es ferner einen Miniscanner mit einem gesicherten Kommunikationsmodus mit dem Endgerät aufweist.

18. Endgerät nach einem der Ansprüche 15 bis 17, **dadurch gekennzeichnet, dass** es durch ein Mobiltelefon (GSM) gebildet ist.

19. Endgerät nach einem der Ansprüche 15 bis 17, **dadurch gekennzeichnet, dass** es durch einen Computer vom Typ PC gebildet ist.

20. Endgerät nach einem der Ansprüche 15 bis 17, **dadurch gekennzeichnet, dass** es durch eine Chipkarte gebildet ist, die mit einem integrierten Bildschirm und einer integrierten Tastatur ausgestattet ist.

21. Endgerät nach einem der Ansprüche 15 bis 17, **dadurch gekennzeichnet, dass** es durch einen persönlichen digitalen Assistenten (PDA für Personal Digital Assistant) gebildet ist.

22. Endgerät nach einem der Ansprüche 15 bis 21, **dadurch gekennzeichnet, dass** der gesicherte Träger durch eine Chipkarte gebildet ist.

23. Endgerät nach einem der Ansprüche 15 bis 21, **dadurch gekennzeichnet, dass** der gesicherte Träger durch eine PCMCIA-Karte gebildet ist.

## Claims

1. A method of protection from alteration for data sent by a user to a secure medium via a reader and received in a non-secure communication mode, **characterised in that** it consists in selecting and storing certain data received in a non-secure mode communication mode and obtaining confirmation of the authenticity of said selected data by verifying that they are identical to those entered upon a request by the user in a secure communication mode of the reader.

2. A protection method according to claim 1, **characterised in that** the data are a command.

3. A protection method according to claim 2, **characterised in that** the command is a key generation command.

4. A protection method according to claim 1, **characterised in that** the data are a document to sign with an electronic signature generated by the secure medium.

5. A protection method according to claim 4, **characterised in that** it consists in selecting and saving certain words of the document to sign and obtaining confirmation of the authenticity of said document by verifying that said selected words are identical to those entered upon a request by the user in a secure communication mode of the reader.

6. A protection method according to claim 5, **characterised in that** the words selected for confirmation are selected by the user in a secure communication mode.

7. A protection method according to any of claims 5 to 6, **characterised in that** the words selected for confirmation are selected by the secure medium.

8. A protection method according to claim 7, **characterised in that** the words selected by the secure medium are selected randomly.

9. A protection method according to claim 7, **characterised in that** the words selected by the secure medium are selected in a deterministic manner, wherein the document to sign is a structured document.

10. A protection method according to claim 9, **characterised in that** the secure medium selects words corresponding to numbers for confirmation.

11. A protection method according to any of claims 4 to 10, **characterised in that** it further consists in asking for confirmation of the location in the document of the words selected for confirmation.

12. A protection method according to claim 11, **characterised in that** the location of the selected words is defined by the numbers of the rows and columns of the document to sign.

13. A protection method according to claim 12, **characterised in that** the secure medium selects an entire column and/or an entire row of the document to sign as the confirmation words.

14. A protection method according to any of claims 4 to 13, **characterised in that** the document to sign is in ASCII format.

15. A terminal capable of communicating with a secure medium by means of a reader comprising a secure communication mode between the medium and the reader, wherein said secure mode does not make any information pass through the terminal, **characterised in that** it comprises a program capable of implementing the following steps:
- sending of data to the secure medium in a non-secure communication mode,
- request for the entry of confirmation data in a secure mode that does not pass through the terminal,
- sending of confirmation data to the secure medium in a secure communication mode.

16. A terminal according to claim 15, **characterised in that** it comprises at least one function key or a function key sequence dedicated for activating the secure mode.

17. A terminal according to any of claims 15 to 16, **characterised in that** it further comprises a mini scanner comprising a secure communication mode with the terminal.

18. A terminal according to any of claims 15 to 17, **characterised in that** it is made up of a mobile telephone (GSM).

19. A terminal according to any of claims 15 to 17, **characterised in that** it is made up of a PC type computer.

20. A terminal according to any of claims 15 to 17, **characterised in that** it is made up of a smart card with integrated screen and keypad.

21. A terminal according to any of claims 15 to 17, **characterised in that** it is made up of a PDA (Personal Digital Assistant).

22. A terminal according to any of claims 15 to 21, **characterised in that** the secure medium is made up of a smart card.

23. A terminal according to any of claims 15 to 21, **characterised in that** the secure medium is made up of a PCMCIA card.
